# EUROPÄISCHE PATENTANMELDUNG

(11) **EP 3 078 850 A1**
(43) Veröffentlichungstag der Anmeldung: **12.10.2016**
(21) Anmeldenummer: 16164211.1
(22) Anmeldetag: 07.04.2016
(51) Int. Cl.: F03D 7/02, F03D 7/04

(54) **ROTOR UND VERFAHREN ZUM EINSTELLEN EINES BLATTSTELLWINKELS EINES ROTORBLATTS AM ROTOR**

(30) Priorität: 07.04.2015 DE 102015105249
(71) Anmelder: Technische Universität Berlin, 10623 Berlin (DE)
(72) Erfinder: WIENS, Staffan, 10967 Berlin (DE)
(74) Vertreter: Bittner, Thomas L.

(57) **Zusammenfassung**

Die Offenbarung betrifft einen Rotor (1), mit einem Rotorblatt (3), einer Nabe (2), an welcher das Rotorblatt (3) mittels eines Lagers gehalten wird, und einer Einstellvorrichtung (7, 8, 10), bei der ein am Fuß (5) des Rotorblatts (3) angeordnetes Koppelbauteil (7) in einer an einem Einstellbauteil (8) angeordneten Führung (10) lagert, derart, dass mittels einer Verlagerung des Einstellbauteils (8) axial zur Rotordrehachse (11) der Nabe (2) ein Blattstellwinkel des Rotorblatts (3) veränderbar ist, wobei die Führung (10) zumindest während der axialen Verlagerung des Einstellbauteils (8) zur Rotordrehachse (11) schräg verläuft. Des Weiteren ist ein Verfahren zum Einstellen eines Blattstellwinkels eines Rotorblatts offenbart.

## Beschreibung

Die Erfindung betrifft einen Rotor sowie ein Verfahren zum Einstellen eines Blattstellwinkels eines Rotorblatts am Rotor.

### Hintergrund

Rotoren kommen zum Beispiel bei Windkraftanlagen zum Einsatz. Hierbei weisen die Rotoren üblicherweise eine Nabenbauform auf. Für die Rotorblätter kann ein Blattstellwinkel oder Blatteinstellwinkel, der auch als Pitchwinkel bezeichnet wird, veränderbar sein. Hierdurch kann die vom Rotor aufgenommene Leistung an die Betriebsbedingungen angepasst werden kann ("Pitchnabe"). Insbesondere kann so ein Schutz vor Überlast realisiert werden. Bestehende Systeme sind häufig kompliziert im Aufbau und lohnen sich nur für Windkraftanlagen über einer bestimmten Größe. Insbesondere für kleine Windkraftanlagen und Modelle von Windkraftanlagen sind geeignete Mechanismen nicht verbreitet.

Im Dokument DE 20 2009 012 104 U1 ist eine Bauform einer kleinen Windkraftanlage beschrieben, bei der die Verstellung des Blattstellwinkels der Rotorblätter unter Nutzung eines koaxial zur Nabe angeordneten Gleitstücks realisiert ist, welches über Gelenkhebel mit den Rotorblättern verbunden ist. Die konstruktive Ausführung mit Gelenken und Stangen führt zu einer notwendigen Größe der Nabe, die sich auch für kleine Rotoren nicht weiter reduzieren lässt. Das ist besonders dann von Nachteil, wenn die von der Nabe eingenommene Fläche im Verhältnis zur gesamten Rotorfläche groß ist. Ein weiterer Nachteil ist, dass die Gelenkstangen die Aerodynamik des Rotors negativ beeinflussen. Eine Schutzverkleidung (Spinner) wäre die gängige Lösung, um das zu verhindern, jedoch verkleinert er den für die Leistungsausbeute wirksamen Teil der Rotorfläche.

Eine kompaktere Bauform eines Rotors mit veränderbarem Blatteinstellwinkel ist in den Dokument EP 1 076 590 B1 beschrieben. Die Veränderung des Blatteinstellwinkels erfolgt in einer Ausführung mittels axialer Verschiebung eines Umsetzmittels, in dessen axialer Mitte eine Aufnahme eingelassen ist, wodurch Hebel bewegt werden, die am Fuß der Rotorblätter befestigt sind, so dass sich die Rotorblätter drehen. Bei dieser Bauform ist von Nachteil, dass eine relativ kleine axiale Verschiebung des Umsetzmittels zu einer großen Veränderung des Blatteinstellwinkels führt, was in der Praxis zu Ungenauigkeiten bei der Einstellung des Blatteinstellwinkels führt. Dies mag für Rotoren von Modellflugzeugen, auf die die bekannte Bauform insbesondere abzielt, hinnehmbar sein, solange der Blatteinstellwinkel nicht während des Betriebs vorgenommen wird, sondern einmalig vor Inbetriebnahme einen gewünschten Blatteinstellwinkel (=Steigung der Luftschraube) eingestellt wird.

### Zusammenfassung

Aufgabe der Erfindung ist es, einen Rotor sowie ein Verfahren zum Einstellen eines Blattstellwinkels eines Rotorblatts am Rotor anzugeben, bei denen das Verstellen des Blatteinstellwinkels auf einfache und effiziente Art und Weise ermöglicht ist. Hierbei soll der Aufbau kompakt gehalten werden.

Die Aufgabe wird gelöst durch einen Rotor nach dem unabhängigen Anspruch 1. Weiterhin ist ein Verfahren zum Einstellen eines Blattstellwinkels eines Rotorblatts am Rotor nach dem unabhängigen Anspruch 12 geschaffen. Ausgestaltungen sind Gegenstand von abhängigen Unteransprüchen.

Nach einem Aspekt ist ein Rotor geschaffen, der ein Rotorblatt sowie eine Nabe aufweist, an welcher das Rotorblatt mittels eines Lagers gehalten wird. Weiterhin ist eine Einstellvorrichtung vorgesehen, bei der ein am Fuß des Rotorblatts angeordnetes Koppelbauteil in einer an einem Einstellbauteil angeordneten Führung lagert, derart, dass mittels einer Verlagerung des Einstellbauteils axial zur Rotorachse der Nabe ein Blattstellwinkel des Rotorblatts veränderbar ist. Die Führung verläuft zumindest während der axialen Verlagerung des Einstellbauteils zur Drehachse schräg.

Nach einem weiteren Aspekt ist ein Verfahren zum Einstellen eines Blattstellwinkels eines Rotorblatts vorgesehen, welches an einer Nabe eines Rotors mittels eines Lagers gehalten wird. Bei dem Verfahren werden ein am Fuß eines Rotorblatts angeordnetes Koppelbauteil in einer an einem Einstellbauteil einer Einstellvorrichtung angeordneten Führung gelagert und das Einstellbauteil axial zu einer Rotordrehachse verlagert, wobei hierbei das Koppelbauteil in der Führung geführt wird, wodurch ein Blattstellwinkel des Rotorblatts verändert wird. Die Führung verläuft zumindest während der axialen Verlagerung des Einstellbauteils zur Drehachse schräg.

In die schräg gestellte Führung greift das Kopplungsbauteil ein, um zum Verändern des Blattstellwinkels geführt zu werden. Beispielsweise handelt es sich bei dem Kopplungsbauteil um einen am Fuß des Rotorblatts angeordneten Stift oder um eine im Fuß des Rotorblatts gelagerte Rolle. Die Führung kann als Nut ausgeführt sein. Die Nut kann mit gleichbleibender oder sich verändernder Tiefe und / oder Breite entlang der Führung ausgebildet sein.

Das Kopplungsbauteil, insbesondere in der Ausführung als Stift, kann in exzentrische Lage am Fuß des Rotorblatts angeordnet sein.

Das Rotorblatt ist mit Hilfe des Lagers an der Nabe aufgenommen und um seine eigene Achse drehbar, so dass der Blattstellwinkel mittels Drehen um die eigene Achse einstellbar ist. Die Einstellvorrichtung ist konfiguriert, die axiale Verlagerung des Einstellbauteils in eine Drehung des Rotorblatts umzusetzen. Die Axialverlagerung des Einstellbauteils kann frei von einer ergänzenden Drehbewegung des Einstellbauteils ausführbar sein.

Die Führung verläuft schräg zur Drehachse, insbesondere in Blickrichtung von oben auf die Führung.

Das Einstellbauteil kann in den verschiedenen axialen Verlagerungsstellungen jeweils wenigstens zum Teil in der Nabe aufgenommen sein. Die Einstellvorrichtung kann ganz oder teilweise in der Nabe angeordnet sein.

Das Lager kann auf einer Innenseite der Nabe angeordnet sein. Der Fuß des Rotorblatts kann einen Durchbruch im Lager durchgreifen und sich auf einer dem Einstellbauteil zugewandten Seite des Lagers über das Lager hinaus erstrecken. Das Rotorblatt, insbesondere der Fuß des Rotorblatts, kann formschlüssig in einer zugeordneten Aufnahme der Nabe und / oder des Lagers aufgenommen sein.

Die Einstellvorrichtung kann einen Aktuator aufweisen, der an das Einstellbauteil koppelt. Der Aktuator stellt eine Antriebskraft zur Verfügung, die zur axialen Verlagerung des Einstellbauteils hierauf einleitbar ist. Der Aktuator kann als Linearaktuator ausgeführt sein. Mit dem Aktuator wird beim Einstellen oder Verändern des Blattstellwinkels des Rotorblatts eine lineare Bewegung des Einstellbauteils in axialer Richtung der Rotordrehachse bewirkt.

Das Einstellbauteil kann an einer Rotorwelle gebildet sein, die zur Nabe verdrehgesichert ist. Das Einstellbauteil kann mittels einer axial verlagerbaren Rotorwelle gebildet sein. Bei dieser oder anderen Ausführungsformen kann das Einstellbauteil einstückig oder mehrstückig ausgeführt sein.

In einer Rotor-Lager-Einheit können ein nabenseitiges Lager und ein wellenseitiges Lager gebildet sein, zwischen denen ein Lagerabstand einstellbar ist. Mittels Veränderung des Lagerabstandes kann die axiale Verlagerung des Einstellbauteils eingestellt werden.

Ein Linearaktuator kann vorgesehen und eingerichtet sein, den Lagerabstand einzustellen.

Es kann ein Paddel vorgesehen sein, welches im Betrieb mit Winddruck beaufschlagt wird. Das Paddel kann an das Einstellbauteil koppeln. Aufgrund der Beaufschlagung mit dem Winddruck kann das Einstellbauteil dann axial verlagert werden. Das Paddel kann alternativ oder ergänzend mit der Rotor-Lager-Einheit verbunden sein, derart, dass der Lagerabstand in Abhängigkeit vom Winddruck eingestellt wird. Das Paddel kann direkt an das Einstellbauteil koppeln, also insbesondere ohne Einbeziehung der Rotor-Lager-Einheit. Das Paddel und / oder die Rotor-Lager-Einheit können mit einem Feder-Dämpfer-System und / oder einer anderen Rückstellvorrichtung koppeln. Hierdurch kann der Blattstellwinkel bei zunehmender Windgeschwindigkeit derart verändert werden, dass die Leistungsaufnahme des Rotors verringert wird und umgekehrt, bei abnehmender Windgeschwindigkeit wieder vergrößert wird.

Die Rotor-Lager-Einheit kann an ein Feder-Dämpfer-System koppeln, derart, dass die Rotor-Lager-Einheit aufgrund eines Rotorschubs gegen das Feder-Dämpfer-System bewegt wird. Hierdurch verlagert sich bei starkem Wind der gesamte Rotor relativ zum Einstellbauteil wodurch eine Veränderung des Blattstellwinkels hervorgerufen wird, die die Leistungsaufnahme des Rotors begrenzt. Bei schwachem Wind kann die Verlagerung des Rotors und die hierdurch einhergehende Leistungsreduzierung mittels der Rückstellkräfte des Feder-Dämpfer-Systems wieder rückgängig gemacht.

Die Führung kann in einem abgeflachten Oberflächenbereich des Einstellbauteils angeordnet sein.

Die Führung kann eine Einführöffnung aufweisen, die an dem Einstellbauteil stirnseitige gebildet ist.

Wenigstens ein weiteres Rotorblatt kann dem Rotorblatt vergleichbar und hierzu entlang des Umfangs der Nabe versetzt an der Nabe angeordnet sein. Die mehreren Rotorblätter können in äquidistanten Abständen entlang des Umfangs der Nabe angeordnet sein. Beispielsweise können drei oder vier Rotorblätter vorgesehen sein.

Die Einstellvorrichtung kann eingerichtet sein, für das Rotorblatt und das wenigstens eine weitere Rotorblatt den jeweiligen Blattstellwinkel synchron einzustellen. Hierzu kann jedes Rotorblatt am Fuß mit einem Koppelbauteil ausgestattet sein, welches in der zugeordneten Führung am Einstellbauteil lagert, die schräg zur Rotordrehachse verläuft.

Die Schräglage oder -stellung der Führung in Bezug auf die Drehachse kann in einer Ausgestaltung derart ausgeführt sein, dass die Führung und die Drehachse in Blickrichtung von oben auf die Nabe einen spitzen Winkel einschließen, zum Beispiel in Blickrichtung längs des Rotorblatts.

In Verbindung mit dem Verfahren zum Einstellen des Blattstellwinkels des Rotorblatts am Rotor können die vorangehend erläuterten Ausgestaltungen entsprechend vorgesehen sein.

Bei dem Verfahren kann vorgesehen sein, dass der Blattstellwinkel des Rotorblatts während des Drehbetriebs des Rotors verändert wird.

Der Rotor kann als Rotor einer Windkraftanlage oder als Luftschraube zum Antrieb eines motorgetriebenen Flugzeugs ausgebildet sein. Auch eine Ausführung als Schiffspropeller oder freilaufender, insbesondere nicht in einem Rohr angeordneter Propeller eines Wasserkraftwerks kann vorgesehen sein.

### Beschreibung von Ausführungsbeispielen

Im Folgenden werden weitere Ausführungsbeispiele unter Bezugnahme auf eine Figur erläutert.

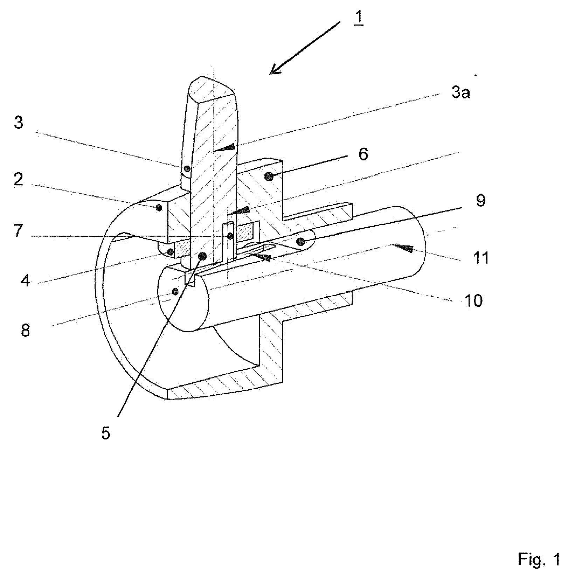

Die einzige Figur zeigt eine perspektivische Darstellung eines Rotors 1 im Schnitt. An einer Nabe 2 wird ein Rotorblatt 3 mittels eines Lagers 4 gehalten. Ein Fuß 5 des Rotorblatts 3 durchgreift hierbei eine Wandung 6 der Nabe 2 sowie das Lager 4. Am Fuß 5 des Rotorblatts 3 ist ein in dem Ausführungsbeispiel als Stift ausgeführtes Kopplungsbauteil 7 angeordnet. Das Kopplungsbauteil 7, welches auch als Hebelbauteil bezeichnet werden kann, ist in Bezug auf eine Rotorblattlängsachse exzentrisch angeordnet.

In die Nabe 2 teilweise eingesteckt ist ein Einstellbauteil 8, welches in der gezeigten Ausführungsform als Rotorwelle gebildet ist. In einem abgeflachten Oberflächenbereich 9 des Einstellbauteils 8 ist eine Führung 10 angeordnet, die in der gezeigten Ausführungsform als Nut oder Aufnahme ausgebildet ist. In die Führung 10 greift das Kopplungsbauteil 7 ein. Die Führung 10 ist schräg gestellt zur Rotordrehachse 11. Die Schräglage oder -stellung der Führung 10 in Bezug auf die Rotordrehachse 11 ist in einer Ausgestaltung derart ausgeführt, dass die Führung 10 und die Rotordrehachse 11 in Blickrichtung von oben auf die Nabe 2 einen spitzen Winkel einschließen, zum Beispiel in Blickrichtung längs des Rotorblatts 3.

Im Innern der Nabe 2 ist die axial verschiebliche Rotorwelle angeordnet, die gegenüber der Nabe 2 verdrehgesichert ist, also mit dem Rotorblatt 3 und der Nabe 2 mitrotiert. Das Rotorblatt 3 ist um die eigene Achse 3a drehbar an der Nabe 2 gelagert. Mittels axialer Verschiebung des als Rotorwelle ausgeführten Einstellbauteils 8 wird das Rotorblatt 3 um seine eigene Achse gedreht. Dafür ist an dem Einstellbauteil 8 je Rotorblatt 3 eine Führung 10 eingearbeitet, deren Mittellinie in Blickrichtung von oben um einen spitzen Winkel geschwenkt zur Rotordrehachse 11 angeordnet ist (Schrägstellung).

In der Führung 10 läuft das jeweilige Kopplungsbauteil 7, das im Fuß 5 des entsprechenden Rotorblatts 3 sitzt. Die Achse des Kopplungsbauteils 7 ist exzentrisch zum Drehpunkt des Rotorblatts 3 und parallel zur Rotorblattachse angeordnet. Hierdurch ergibt sich abhängig von der axialen Position des als Rotorwelle ausgeführten Einstellbauteils 8 eine bestimmte laterale Position des Kopplungsbauteils 7 und damit ein bestimmter Blatteinstellwinkel des Rotorblatts 3.

Bei einer Bauform erfolgt die Einstellung des Blatteinstellwinkels beziehungsweise die axiale Verschiebung der Rotorwelle mittels eines Linearaktuators. Hierzu ist die Rotorwelle in der Nabe 2 axial verschiebbar gelagert. Die Rotorwelle kann aus einem geeigneten Material gefertigt sein, damit die Kräfte zur Überwindung der Reibung möglichst klein sind.

Die Rotorlagerung kann aus einem Festlager, welches die Nabe 2 in einem Gehäuse lagert, sowie einem Lager bestehen, welches fest auf der Welle positioniert ist und in geeigneter Weise mit dem Linearaktuator verbunden ist. Ein Generator zur Umwandlung einer Rotationsenergie in elektrische Energie kann hierbei entweder an die Rotorwelle gekoppelt sein und wird somit ebenfalls axial verschoben, oder er ist mit der Nabe 2 verbunden und mit einer Hohlwelle ausgestattet, durch die die Rotorwelle hindurchgeht, oder er ist über ein geeignetes Getriebe mit der Nabe 2 verbunden.

In einer alternativen Ausführungsform wird der Winddruck ausgenutzt, um die axiale Positionierung des als Rotorwelle ausgeführten Einstellbauteils 8 gegenüber der Nabe 2 zu erzielen. Dafür kann entweder die Welle mit einem geeigneten Mechanismus mit einem Paddel verbunden werden, welches vom Wind beaufschlagt wird, oder der Winddruck auf den Rotor 1 selbst wird genutzt, um die Rotorblätter inklusive der Nabe 2 gegenüber der in dieser Anordnung ortsfesten Welle zu verschieben. In beiden Fällen kann das axial verschiebbare Einstellbauteil 8 über ein Feder-Dämpfer-System gegen den Winddruck abgestützt werden.

Mit dem Rotor 1 können insbesondere Kleinwindanlagen kostengünstig mit einer Blattwinkelverstellung ausgeführt werden. Bei einer Windkraftanlage mit Blattwinkelverstellung kann der Schutz vor Überlast mittels Verstellung des Blatteinstellwinkels erfolgen, wodurch auch der Produktionsbetrieb bei hohen Windgeschwindigkeiten möglich ist.

Auch für Modellflugzeuge, Drohnen oder kleinere Motorflugzeuge, zum Beispiel Ultraleichtflugzeuge oder Segelflugzeuge mit Hilfsantrieb, kann die Nutzung des Rotors 1 vorgesehen sein. Es ergeben sich zum Beispiel im Steigflug ganz andere Geschwindigkeiten als im (motorunterstützten) Gleiten, wobei nur durch eine Anpassung der Steigung in den unterschiedlichen Betriebssituationen die maximale Energieeffizienz erreicht werden kann. Hierdurch kann im Vergleich zu einer Luftschraube, bei der die Steigung einmalig als Kompromiss zwischen den Auftretenden Betriebssituationen eingestellt wird, Treibstoff eingespart werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Rotor (1), mit:
- einem Rotorblatt (3);
- einer Nabe (2), an welcher das Rotorblatt (3) mittels eines Lagers gehalten wird; und
- einer Einstellvorrichtung (7, 8, 10), bei der ein am Fuß (5) des Rotorblatts (3) angeordnetes Koppelbauteil (7) in einer an einem Einstellbauteil (8) angeordneten Führung (10) lagert, derart, dass mittels einer Verlagerung des Einstellbauteils (8) axial zur Rotordrehachse (11) der Nabe (2) ein Blattstellwinkel des Rotorblatts (3) veränderbar ist, wobei die Führung (10) zumindest während der axialen Verlagerung des Einstellbauteils (8) zur Rotordrehachse (11) schräg verläuft.

2. Rotor (1) nach Anspruch 1, **dadurch gekennzeichnet, dass** die Einstellvorrichtung (7, 8, 10) einen Aktuator aufweist, der an das Einstellbauteil (8) koppelt.

3. Rotor (1) nach Anspruch 1 oder 2, **dadurch gekennzeichnet, dass** das Einstellbauteil (8) an einer Rotorwelle gebildet ist, die zur Nabe (2) gegen Verdrehen gesichert ist.

4. Rotor (1) nach mindestens einem der vorangehenden Ansprüche, **dadurch gekennzeichnet, dass** in einer Rotor-Lager-Einheit ein nabenseitiges Lager und ein wellenseitiges Lager gebildet sind, zwischen denen ein Lagerabstand einstellbar ist.

5. Rotor (1) nach Anspruch 4, **gekennzeichnet durch** einen Linearaktuator, der eingerichtet ist, den Lagerabstand einzustellen.

6. Rotor (1) nach mindestens einem der vorangehenden Ansprüche, **gekennzeichnet durch** ein Paddel, welches im Betrieb mit Winddruck beaufschlagt wird.

7. Rotor (1) nach mindestens einem der Ansprüche 4 bis 6, **dadurch gekennzeichnet, dass** die Rotor-Lager-Einheit an ein Feder-Dämpfer-System koppelt, derart, dass die Rotor-Lager-Einheit aufgrund eines Rotorschubs gegen das Feder-Dämpfer-System bewegt wird.

8. Rotor (1) nach mindestens einem der vorangehenden Ansprüche, **dadurch gekennzeichnet, dass** die Führung (10) in einem abgeflachtem Oberflächenbereich (9) des Einstellbauteils (8) angeordnet ist.

9. Rotor (1) nach mindestens einem der vorangehenden Ansprüche, dadurch **gekenn-zeichnet**, dass die Führung (10) eine Einführöffnung aufweist, die an dem Einstellbauteil (8) stirnseitig gebildet ist.

10. Rotor (1) nach mindestens einem der vorangehenden Ansprüche, dadurch **gekenn**z e i c h n e t, dass wenigstens ein weiteres Rotorblatt dem Rotorblatt (3) vergleichbar und hierzu entlang des Umfangs der Nabe (2) versetzt an der Nabe (2) angeordnet ist.

11. Rotor (1) nach Anspruch 10, **dadurch gekennzeichnet, dass** die Einstellvorrichtung eingerichtet ist, für das Rotorblatt (3) und das wenigstens eine weitere Rotorblatt den jeweiligen Blattstellwinkel synchron einzustellen.

12. Verfahren zum Einstellen eines Blattstellwinkels eines Rotorblatts (3), welches an einer Nabe (2) eines Rotors (1) mittels eines Lagers gehalten wird, wobei bei dem Verfahren
- ein am Fuß (5) eines Rotorblatts (3) angeordnetes Koppelbauteil (8) in einer an einem Einstellbauteil (8) einer Einstellvorrichtung (7, 8) angeordneten Führung (10) gelagert wird und
- das Einstellbauteil (8) axial zu einer Rotordrehachse (11) verlagert und hierbei das Koppelbauteil (7) in der Führung (10) geführt wird, wodurch ein Blattstellwinkel des Rotorblatts (3) verändert wird,
wobei die Führung (10) zumindest während der axialen Verlagerung des Einstellbauteils 8) zur Rotordrehachse (11) schräg verläuft.

13. Verfahren nach Anspruch 13, dadurch **g**ekennzeichnet, dass der Blattstellwinkel des Rotorblatts (3) während des Drehbetriebs des Rotors verändert wird.
